# FASCICULE DE BREVET EUROPEEN

(11) **EP 1 762 087 B1**
(45) Date de publication et mention de la délivrance du brevet: **18.03.2015**
(21) Numéro de dépôt: 05767939.1
(22) Date de dépôt: 28.06.2005
(51) Int. Cl.: H04N 21/433, H04N 21/44, H04N 21/442, H04N 21/475, H04N 21/6543, H04N 21/658, H04N 21/81, H04N 21/8355, H04N 5/76, H04N 7/16

(54) **PROCEDE DE VISUALISATION DE SEQUENCES AUDIOVISUELLES AU NIVEAU D'UN RECEPTEUR, ET RECEPTEUR APTE A LES VISUALISER**
VERFAHREN ZUM ANZEIGEN AUDIOVISUELLER SEQUENZEN IN EINEM EMPFÄNGER UND DAFÜR GEEIGNETER EMPFÄNGER
METHOD FOR DISPLAYING AUDIOVISUAL SEQUENCES AT RECEIVER LEVEL AND RECEIVER FOR DISPLAYING SAID SEQUENCES

(30) Priorité: 30.06.2004 FR 0407250
(43) Date de publication de la demande: 14.03.2007
(73) Titulaire: Thomson Licensing, 92130 Issy-les-Moulineaux (FR)
(72) Inventeur: HIRON, Franck, F-35220 Chateaubourg (FR); MAETZ, Yves, F-35520 Melesse (FR)
(74) Mandataire: Morain, David
(86) Numéro de dépôt international: PCT/EP2005/053024
(87) Numéro de publication internationale: WO 2006/010685

(56) Documents cités:
- EP-A- 1 263 224
- US-A1- 2001 042 249
- US-A1- 2002 129 362

## Description

L'invention concerne un procédé de visualisation de séquences audiovisuelles par un récepteur, et un récepteur apte à les visualiser. L'invention concerne plus particulièrement l'affichage de séquences publicitaires associées à un certain événement ou à un produit que l'on veut lancer.

De nos jours, de nombreux événements sont précédés d'une campagne publicitaire. L'événement peut être par exemple, la sortie d'un film en salle, le lancement d'une nouvelle voiture ou la mise sur le réseau de diffusion lorsqu'un contenu audiovisuel particulièrement intéressant. Un autre type de campagne publicitaire consiste à mettre en scène un produit ou à rappeler les caractéristiques d'un produit. Généralement les annonceurs publicitaires développent un véritable scénario permettant d'attirer peu à peu l'intérêt du consommateur vers le produit objet de la campagne publicitaire. Concrètement, une campagne publicitaire est composée de plusieurs séquences publicitaires (ou écrans publicitaires) se succédant chronologiquement jusqu'à la date de lancement ou de mise sur le marché du produit.

Dans le domaine des programmes audiovisuels, les utilisateurs sont dotés d'appareils permettant de visualiser des programmes audiovisuels diffusées à partir d'un réseau de diffusion ou téléchargées d'un réseau numérique à haut débit. On trouve de plus en plus d'appareils permettant d'enregistrer des temps très longs de programmes. Ces moyens sont par exemple, le lecteur/enregistreur de DVD (ou DVD-RAM selon une terminologie anglo-saxonne), ou le disque dur (ou « Hard Disk Drive» selon une terminologie anglo-saxonne, HDD en abrégé). Ces moyens permettent d'enregistrer des programmes audiovisuels reçus en temps réel d'un réseau de diffusion, et de les restituer à la demande.

Lorsque la campagne publicitaire s'effectue sur un réseau de diffusion, le diffuseur va programmer la visualisation des séquences à des moments déterminés conformément aux souhaits de l'annonceur publicitaire. Il ne peut cependant pas prévoir le comportement de l'utilisateur de l'appareil de visualisation. Par exemple, celui-ci peut être un téléspectateur occasionnel qui allume son appareil très peu souvent et ne verra ainsi qu'une partie des séquences publicitaires de la campagne. Supposons que la campagne se compose de 5 séquences publicitaires chronologiques. Un utilisateur occasionnel ne verrait que les séquences 1, 2 et 5, la campagne publicitaire lui paraîtrait mal faite. Au pire, s'il enregistre les programmes audiovisuels dans son appareil, il risque de voir les séquences dans un ordre différent de celui prévu par l'annonceur.

Un des avantages de la présente invention est d'assurer à l'annonceur que l'utilisateur regarde un scénario publicitaire le plus proche possible de celui prévu par l'annonceur. De plus, la présente invention peut optimiser la couverture et l'impact d'une campagne publicitaire axée sur un produit, un événement précis ou un programme dont la diffusion est annoncée à l'avance, en adaptant la visualisation des séquences publicitaires aux habitudes de visualisation de l'utilisateur.

Le document EP 1 263 224 décrit une méthode pour contrôler l'apparition des publicités à l'écran. Les publicités sont mémorisées dans la récepteur. Selon cet art antérieur, une priorité est associée à chaque séquence publicitaire permettant de les sélectionner au moment de l'affichage. La sélection est déclenchée par un signal transmis par le réseau de diffusion, comprenant une commande d'affichage, une commande d'effacement, une commande de contrôle d'application, un identificateur de séquences publicitaires. De sorte que la visualisation de la séquence de publicité est uniquement contrôlée par le scénario reçu et par les signaux de diffuseur. On ne prend donc pas en compte les habitudes de l'utilisateur et notamment le fait que pendant les heures prévues dans le scénario, il n'est pas devant son téléviseur.

Un objet de la présente invention est un procédé de visualisation de séquences audiovisuelles, de préférence de type publicitaire au niveau de l'appareil d'un utilisateur, les émissions étant transmises par avance par un diffuseur et visualisées à des moments déterminés par le diffuseur et modifiés dans une mesure prévue par le diffuseur selon des critères propres à l'appareil. De cette manière, on peut assurer à un annonceur le bon déroulement d'un scénario quel que soit le comportement de l'utilisateur. Par exemple, on peut garantir que tous les contenus audiovisuels ont été vus au moins une fois. Ainsi, la couverture et l'impact des contenus publicitaires sont optimisés grâce au contexte individuel de chaque utilisateur. L'invention permet également aux annonceurs publicitaires de disposer d'un nouveau moyen de diffusion de leurs messages publicitaires.

L'invention propose un procédé de visualisation de séquences audiovisuelles par un appareil doté d'un moyen de réception et d'enregistrement des dites séquences selon la revendication 1.

Grâce à un ordonnancement intelligent effectué localement, l'événement ou le produit annoncé aura une meilleure pénétration et une meilleure efficacité pour chaque utilisateur. L'obligation pour l'utilisateur de visualiser de façon concomitante des programmes audiovisuels sélectionnés par l'utilisateur et des séquences publicitaires programmées selon un scénario définis par l'annonceur à l'origine de ces séquences. Ainsi, en utilisant le procédé ci-dessus, un utilisateur peut acquérir auprès d'un distributeur, un appareil capable de rechercher et de visualiser des messages publicitaires, l'acquisition s'effectuant avec une réduction du coût grâce aux droits prospectifs correspondant aux messages qui seront visualisés par cet appareil. L'appareil met à jour des données d'utilisation de l'appareil et peut ainsi connaître ses habitudes. De cette façon, une séquence peut être sélectionnée et visualisée avant la fenêtre temporelle indiquée dans le scénario si les données d'utilisation montrent que l'appareil n'est habituellement pas utilisé pendant la fenêtre temporelle définie dans le scénario. Cela permet d'anticiper les absences de l'utilisateur et lui montrer plus tôt que prévu dans le scénario certaines séquences.

Des formes de réalisation avantageuses de ce procédé sont définies dans les revendications 2 à 7.

L'invention propose également un récepteur d'émissions audiovisuelles selon la revendication 8.

Des formes de réalisation avantageuses de ce récepteur sont définies dans les revendications 9 à 13.

La présente invention apparaîtra maintenant avec plus de détails dans le cadre de la description qui suit d'exemples de réalisation donnés à titre illustratif en se référant aux figures annexées qui représentent :
- la figure 1 est un diagramme bloc d'un récepteur audiovisuel pour la mise en oeuvre de l'invention,
- les figures 2a et 2b illustre un exemple de scénario envoyé par un diffuseur et ce qui est réellement visualisé à un utilisateur selon l'art antérieur,
- la figure 3 montre un automate d'états finis illustrant l'exécution du module ORD selon un scénario donné,
- la figure 4 présente un organigramme d'exécution du module ORD.

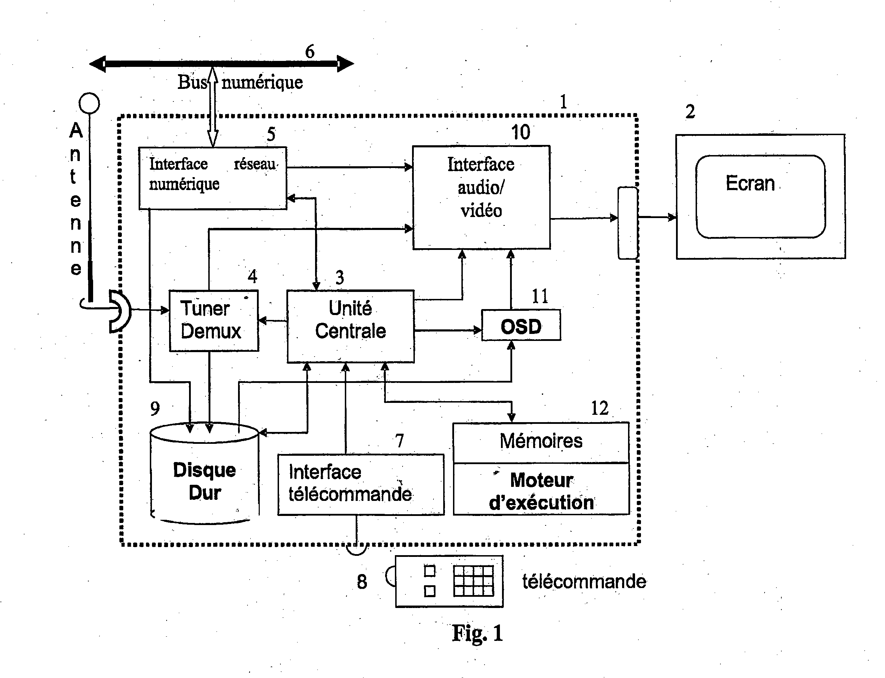

On décrira tout d'abord à l'aide de la figure 1, le fonctionnement d'un récepteur audiovisuel 1 muni d'un dispositif d'affichage 2. Le récepteur comprend une unité centrale 3 reliée à une mémoire 12 de programme (ROM) et de travail (RAM), et une interface 5 pour la communication avec un bus numérique local à haut débit 6 permettant de transmettre des données audio/vidéo en temps réel. Ce réseau est par exemple un réseau IEEE 1394. Ce bus numérique permet également d'envoyer des données à un serveur. Le récepteur peut également recevoir des données audio/vidéo d'un réseau de diffusion à travers une antenne de réception associée à un démodulateur 4. Le récepteur comprend en outre un récepteur de signaux infrarouge 7 pour recevoir les signaux d'une télécommande 8, un moyen de mémorisation 9 pour le stockage de contenus audiovisuels, et une logique de décodage audio/vidéo 10 pour la génération des signaux audiovisuels envoyés à l'écran de télévision 2. La nature des émissions audiovisuelles étant numérique, le moyen de mémorisation 9 est de préférence un disque dur (HDD), il peut aussi être un lecteur/enregistreur de disque optique enregistrable (DVD-RAM).

Le récepteur dispose également d'une horloge (non représentée) permettant de synchroniser des visualisations à des moments prévues par le fournisseur de contenus.

Le récepteur comprend également un circuit 11 d'affichage de données sur l'écran, appelé souvent circuit OSD, de l'anglais "On Screen Display" (signifiant littéralement "affichage sur l'écran"). Le circuit OSD 11 est un générateur de texte et de graphisme qui permet d'afficher à l'écran des menus, des pictogrammes (par exemple, un numéro correspondant à la chaîne visualisée), ou qui permet de mélanger deux contenus audiovisuels. Le circuit OSD est notamment contrôlé par l'Unité Centrale 3 associé à un module exécutable appelé « Ordonnanceur ». L'Ordonnanceur ou ORD en abrégé dans la suite du document, est typiquement constituée d'un module de programme résident en mémoire morte 12 et de paramètres enregistrés en mémoire de travail. Le module ORD peut aussi être réalisé sous la forme d'un circuit spécialisé de type ASIC par exemple.

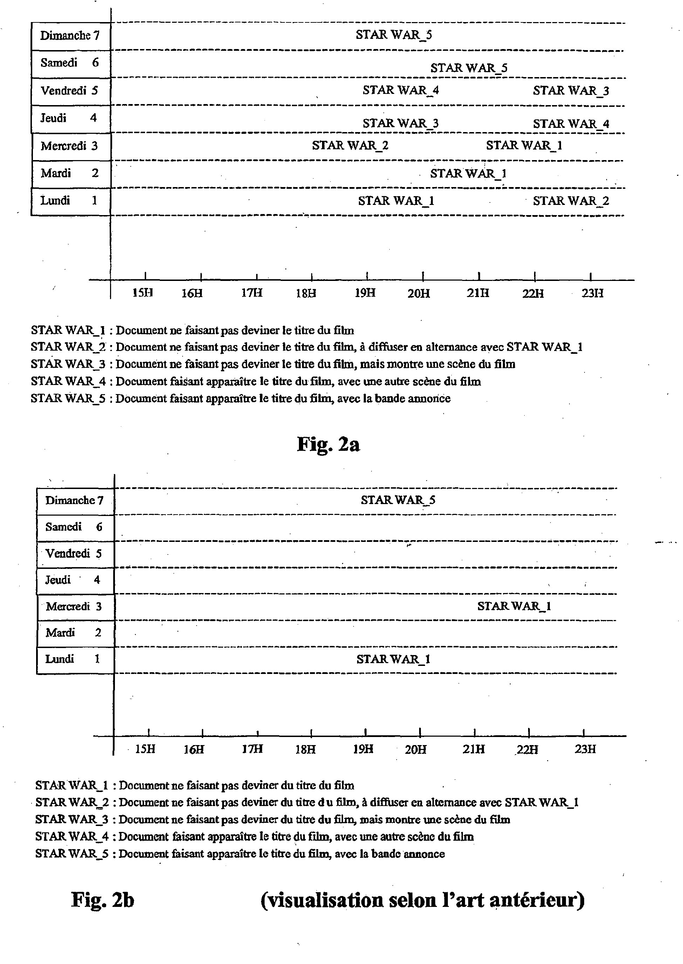

Dans un premier temps, nous allons expliquer comment s'effectue la diffusion d'une campagne publicitaire. Le diffuseur émet des spots publicitaires à des moments déterminés. Il connaît statistiquement la fourchette de population qui est à ce moment devant un téléviseur, mais il ne peut en aucun cas cibler un particulier. Le diffuseur peut définir un scénario optimal en fonction des habitudes d'une population moyenne d'utilisateurs mais ne peut en aucun cas garantir que tous seront satisfaits. Supposons par exemple que la campagne publicitaire porte sur le film « Star War » et que cette campagne comporte cinq contenus audiovisuels différents (ou flashs publicitaires), identifiés : STAR WAR1, STAR WAR2, ... STAR WAR5. Ces contenus doivent être diffusés au cours de la semaine qui précède la diffusion du film ou son lancement en salle. Dans le scénario représenté par la figure 2a, le diffuseur commence le lundi à diffuser STAR WAR1 à 19h00 et STAR WAR2 à 22h00. Puis, au fil de la semaine, les contenus audiovisuels évoluent de façon à éveiller l'intérêt de l'utilisateur. Par exemple, le contenu STAR WAR1 montre quelques images du film mais le laisse pas deviner son titre. Le contenu STAR WAR2 montre d'autres images du film sans laisser deviner son titre (STAR WAR1 et STAR WAR2 sont conçus pour être visualisés en alternance). Le contenu STAR WAR3 montre des scènes du film avec les principaux acteurs mais le laisse pas deviner son titre. Le contenu STAR WAR4 montre des scènes importantes et le titre du film. STAR WAR5 est la bande annonce du film.

En se basant sur cette façon connue de faire, analysons maintenant ce qui se passe réellement chez un utilisateur et illustrons-le par un exemple. Supposons un utilisateur qui est souvent absent de son domicile, la figure 2b montre ce qui va être réellement visualisé. L'utilisateur est absent le mardi, jeudi, vendredi et samedi. De ce fait, il ne voit que trois contenus : STAR WAR1 le lundi à 19h00, de nouveau STAR WAR1 le mercredi à 21h00 et STAR WAR5 le dimanche. Donc l'utilisateur ne voit pas les séquences intermédiaires STAR WAR2, STAR WAR3, STAR WAR4. La visualisation de ces séquences ne correspond pas du tout au scénario de l'annonceur publicitaire, l'intérêt de l'utilisateur ne sera pas progressivement éveillé comme te souhaite l'annonceur.

La présente invention permet de résoudre ce problème en personnalisant la visualisation d'une campagne publicitaire en l'adaptant aux habitudes de l'utilisateur. Le module ORD contrôle la visualisation des séquences, ces séquences étant des contenus audiovisuels à présenter à l'utilisateur à des moments déterminés. Pour calculer le moment de visualisation, le module ORD utilise un contexte d'utilisation du récepteur de télévision. Le contexte est un bloc de données mis à jour localement dans la mémoire de travail (RAM) du récepteur, il peut contenir les données suivantes :
- temps moyen d'utilisation du récepteur,
- plages horaires probable d'utilisation du récepteur,
- nombre et identificateur des séquences de la campagne,
- plages horaires des séquences déjà visualisées.

La première partie qui concerne les habitudes de l'utilisateur du contexte peut être extraite d'un profil utilisateur géré par un autre module. Une autre façon de faire consiste à créer un tableau en mémoire de travail définissant pour chaque jour de la semaine, le temps moyen et les plages horaires probables de visualisation. Voici un exemple d'un tel tableau :

**TABLEAU 1**

| **Jour** | **Temps moyen d'utilisation** | **Plages horaires probables d'utilisation** |
|---|---|---|
| Lundi | 1h34' | [19h32-20h15] |
| Mardi | 1h23' | [19h28-20h19] |
| Mercredi | 2h10' | [16h32-17h16] ; [19h45-20h52] |
| Jeudi | 0h56' | [19h45-20h15] |
| Vendredi | 3h15' | [18h50-21h23] |
| Samedi | 4h15' | [12h15-13h26]; [19h53-21h15] |
| Dimanche | 2h10' | [20h32-22h15] |

Les données du tableau 1 sont quotidiennement mises à jour par un module logiciel qui lit une horloge et en déduit les données d'utilisation du récepteur. Une façon de faire consiste à utiliser une fenêtre temporelle glissante de 4 semaines et à calculer jour après jour les habitudes de l'utilisateur. Selon un perfectionnement, le contexte prend en compte la chaîne ou le service sélectionné par l'utilisateur. Dans ce cas, les données du tableau ci-dessus sont dupliquées en autant de tableaux que de chaînes ou services accessibles par le récepteur. Selon un autre perfectionnement, le récepteur comporte en mémoire autant de tableaux définissant un contexte que d'utilisateurs du récepteur. Selon ce perfectionnement, un utilisateur s'identifie lors de l'allumage de son récepteur, le module ORD prend alors en compte le tableau associé à cet utilisateur. Nous verrons par la suite où sont mémorisées les données de la seconde partie du contexte qui concerne l'état à l'instant présent de la campagne publicitaire.

Dans un premier temps, le récepteur reçoit un bloc d'informations définissant un ensemble de règles qui vont permettre au niveau du récepteur d'élaborer un scénario de diffusion de contenus publicitaires. Ce bloc est composé d'un ou plusieurs contenus identifiés, et d'un bloc de données associé à un nombre minimum/maximum de visualisation des contenus et/ou des moments déterminés pour leurs visualisations. En variante, le bloc d'information contient des règles et des liens permettant de télécharger les contenus publicitaires, dans ce cas le stockage est distant et le récepteur n'a pas besoin d'une grande capacité de stockage. La recherche des contenus s'effectue par exemple par une liaison à haut débit relié au réseau Internet.

Voici un exemple d'un bloc de données définissant les règles de visualisation d'une pluralité de cinq contenus audiovisuels selon un mode simplifié de réalisation de l'invention, chacune des lignes du tableau est considérée comme une règle :

**TABLEAU 2**

| **(données générales de définition du scénario publicitaire)** | | |
|---|---|---|
| Identificateur du contenu audiovisuel | Nombre d'occurrences programmées | Fenêtres de visualisation Programmées |
| STAR WAR1 | De 1 à 10 fois | Lundi 24/5, Mardi 25/5 |
| STAR WAR2 | De 1 à 5 fois | Mardi 25/5, Mercredi 26/5 |
| STAR WAR3 | De 1 à 4 fois | Jeudi 27/5 |
| STAR WAR4 | De 2 à 6 fois | Vendredi 28/5, Samedi 29/5 |
| STAR WAR5 | De 2 à 4 fois | Samedi 29/5, Dimanche 30/5 |

Les données générales peuvent notamment comprendre :
- l'identificateur de l'événement audiovisuel objet du scénario, et notamment le moment final de la campagne (c'est-à-dire, la date et l'heure butée où plus aucun contenu ne sera visualisé au niveau des récepteurs),
- l'identificateur de ou des chaînes ou du ou des services qui peut ou peuvent visualiser les contenus, cette information n'exclue pas qu'une campagne publicitaire déterminée puisse être affichée quelle que soit la chaîne ou le service sélectionné par l'utilisateur,
- la durée de la campagne, dans l'exemple c'est une semaine, les sept jours étant notés J1, J2, ... J7,
- le nombre de contenus audiovisuels.

La zone des contenus comprend des lignes identifiées par un ou plusieurs contenus combinés. L'annonceur a défini pour chaque ligne le nombre d'occurrences et la ou les fenêtre(s) temporelles (s) prévue(s) pour visualiser le ou les contenu(s) identifiant la ligne. Le nombre d'occurrences programmées est le nombre de fois que l'annonceur commande au module ORD de visualiser le contenu associé au cours de la plage de visualisation définie dans la troisième colonne. Par exemple, le contenu STAR WAR1 doit être visualisé entre une et dix fois dans la plage du lundi 24/5 au mardi 25/5.

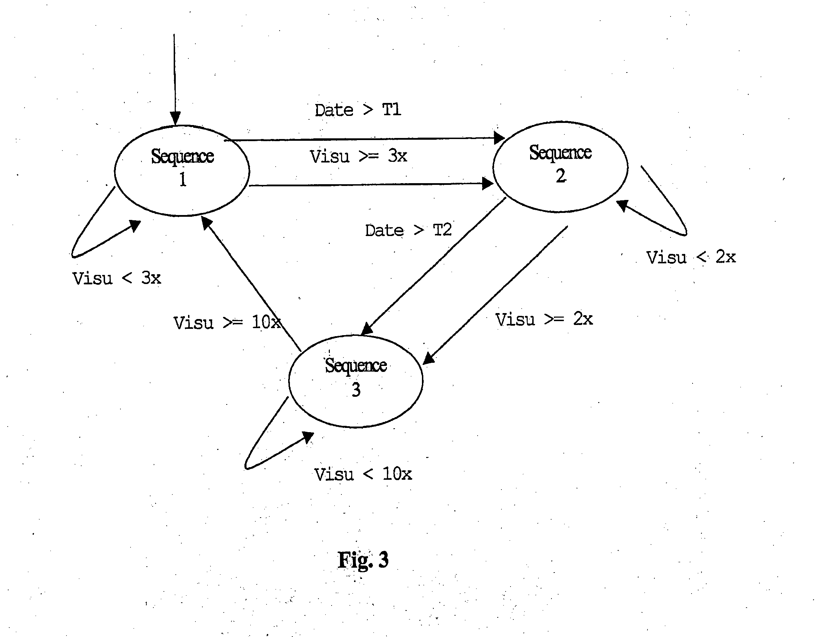

Le tableau 2 définit un exemple de scénario. On peut représenter l'exécution d'un scénario par un automate d'états finis. Un exemple d'automate d'états finis est donné à la figure 3. On passe d'un état à un autre si une date est expirée ou lorsqu'un nombre de visualisation est atteint. Cette manière d'exprimer les choses permet plus de souplesse pour la définition, et permet notamment de définir un ordre quelconque dans la suite des séquences. L'automate d'états finis représente un « scénario idéal » de visualisation, il peut être extrêmement complexe si le scénario comporte beaucoup de règles....

La plage de visualisation associée à un contenu détermine le moment où l'annonceur recommande au module ORD de visualiser le contenu associé. Cette plage peut être définie par un ou plusieurs jours, mais l'annonceur peut la définir plus finement à l'aide de plages horaires en spécifiant des heures de début et de fin pour chaque jour.

Selon un premier perfectionnement, l'annonceur publicitaire peut associer deux contenus et décider de les visualiser en alternance. Par exemple une ligne du scénario spécifie que STAR WAR1 et STAR WAR2 doivent être visualisés en alternance le mardi. Cette spécificité est définie dans une nouvelle ligne du tableau 2 identifiée par deux identificateurs de contenus combinés comprenant les données suivantes :

| | | |
|---|---|---|
| STAR WAR1, STARWAR2 | De 1 à 3 alternances | Jeudi 27/5 |

De façon simple, le module ORD sélectionne les contenus selon l'ordre de la liste d'identificateurs définis dans la ligne, de cette façon l'annonceur indique lui-même le premier contenu visualisé, puis le second, etc. Selon un perfectionnement, l'annonceur indique par un drapeau que l'ordre de visualisation des contenus identifié s'effectue aléatoirement.

Le bloc du scénario publicitaire est mémorisé en mémoire de travail et immédiatement exploité par le module ORD. Plusieurs scénarii publicitaires peuvent s'exécuter en même temps, chaque scénario étant défini par son bloc de données propre et donc concerne des contenus audiovisuels de préférence distincts. Le bloc mémorisé contient d'autres données relatives au nombre de fois où le contenu a été reproduit, et à quels moments les reproductions se sont effectuées. Le tableau 3 ci-dessous montre l'état d'un bloc mémorisé contenant des données relatives à la campagne définie par le tableau 2 et à la date du 26/5 à 19h00. :

**TABLEAU 3**

| **(données générales de définition du scénario publicitaire mises en mémoire du récepteur)** | | | | |
|---|---|---|---|---|
| Identificateur | Nombre d'occurrences programmées | Fenêtres de visualisation | Nombre d'occurrences Effectuées | Date et heure des occurrences |
| STAR WAR1 | De 1 à 10 fois | 24/5, 25/5 | 3 | 24/5 :19h27, |
| | | | | 24/5 : 2h45, |
| | | | | 25/5 : 18h15 |
| STAR WAR2 | De 1 à 5 fois | 25/5, 26/5 | 2 | 25/5 : 18h26 |
| | | | | 26/5 : 18h56 |
| STARWAR3 | De 1 à 4 fois | 27/5 | 0 | |
| STAR WAR4 | De 2 à 6 fois | 28/5, 29/5 | 0 | |
| STAR WAR5 | De 2 à 4 fois | 2915, 30/5 | 0 | |

On voit dans les données du tableau que le module ORD a pu visualiser trois fois le contenu STAR WAR1, au cours de trois plages publicitaires. Le contenu STAR WAR2 a été visualisé deux fois. La date courante étant le 26/5, lorsque la prochaine plage publicitaire sera annoncée, le module ORD sélectionnera le contenu STAR WAR2. Les autres contenus sont programmés les jours suivants par l'annonceur, les compteurs d'occurrences associés ont donc une valeur nulle. Le nombre d'occurrences effectuées, la date et l'heure de visualisation des contenus constituent ce que l'on a précédemment appelé la seconde partie du contexte qui concerne l'état à l'instant présent de, la campagne publicitaire.

Voyons maintenant comment le module ORD fonctionne. L'utilisateur allume son récepteur, le module ORD est automatiquement lancé et analyse les blocs de scénario déjà enregistrés. L'utilisateur sélectionne une chaîne ou un service et la visualisation commence. En fonction de la chaîne ou du service sélectionné, le module ORD élabore la liste des blocs de scénario concernés. Si aucun bloc ne possède de contenus visualisable sur la chaîne ou le service sélectionné, le module ORD peut être déconnecté jusqu'au prochain changement de chaîne ou au prochain allumage. Une fois la liste des blocs élaborés (les blocs sont dits activés), le module ORD est en attente de la diffusion de la prochaine plage publicitaire adaptable. Le qualificatif « adaptable » exprime le fait que les contenus publicitaires visualisés sont adaptés à l'utilisateur. Le choix du contenu s'effectue en fonction de :
- l'heure et la date courante,
- le nombre de visualisations déjà effectuées pour chaque contenu,
- le contexte lié à l'utilisateur et à la chaîne ou service sélectionné.
- éventuellement, les priorités affectées aux contenus.

Lorsqu'une plage adaptable définie par le diffuseur de la chaîne ou du service est annoncée, le module ORD détermine le ou les contenus qui vont être visualisés. Ce signal d'annonce est placé dans un champ propriétaire d'un descripteur d'une table DVB-SI. Le signal d'annonce comprend le moment précis du début de la plage publicitaire et éventuellement, le temps consacré à de la publicité adaptable. Dès la détection d'un tel signal, le module ORD analyse son contexte et en fonction des règles du scénario, déduit la séquence à visualiser. Ce calcul peut se faire très rapidement et l'utilisateur ne s'aperçoit pas que la séquence publicitaire n'est pas celle diffusée sur le canal sélectionné mais un contenu que le récepteur vient de rechercher. Pour un bloc définissant un scénario, le module ORD sélectionne un seul contenu à visualiser.

Au moment indiqué du début de la plage publicitaire, le module ORD commute la visualisation du moyen de réception vers le disque dur pour lire successivement le contenu audiovisuel sélectionné préalablement. Si plusieurs scénarios sont activés, le module ORD peut visualiser successivement plusieurs contenus. Une fois que tous les contenus sélectionnés visualisés, et s'il reste du temps de plage publicitaire, le module ORD peut commuter sur le moyen de réception pour visualiser la fin de la plage publicitaire diffusée par le service sélectionné par l'utilisateur. Avantageusement, le disque dur est utilisé pour différer un peu les émissions afin de ne pas couper des séquences publicitaires.

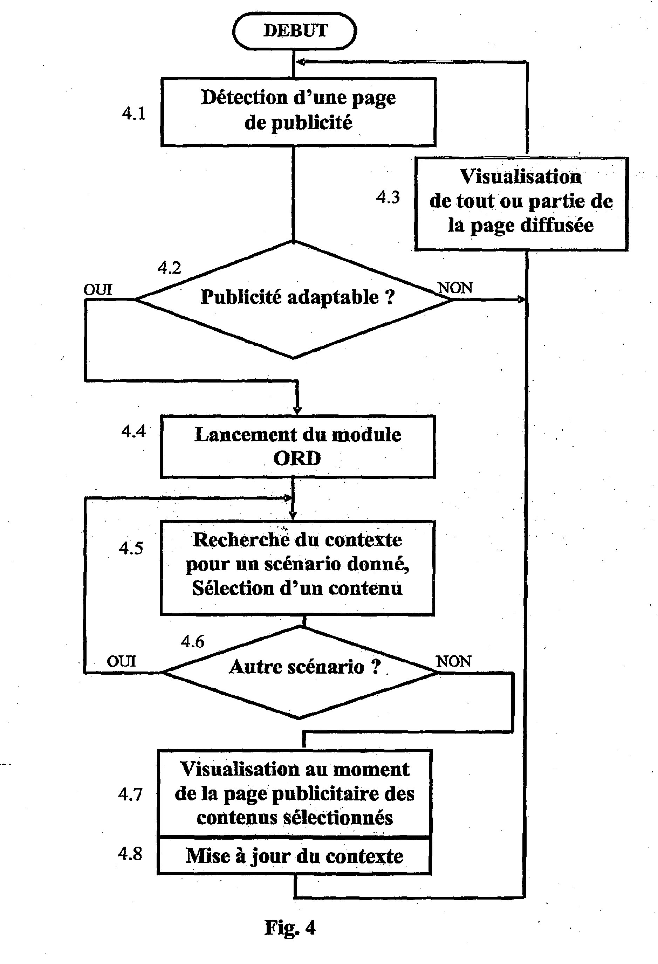

L'organigramme de la figure 4 illustre le fonctionnement du module ORD. La première étape (4.1) consiste à détecter l'annonce de la diffusion d'une page de publicité. Le récepteur détermine à l'étape 4.2 si c'est une page de publicité adaptable. Cela s'effectue en détectant, le ou les descripteurs associés à cette page, un drapeau permettant de différencier une séquence de publicité « normale » et une publicité «adaptable ». Si ce n'est pas une page de publicité adaptable, les contenus publicitaires diffusés et reçus seront visualisés sans modification, c'est-à-dire toute la plage publicitaire diffusée (étape 4.3). Si c'est une page de publicité adaptable, alors le module ORD est lancé (étape 4.4). A l'étape 4.5, le module ORD recherche le contexte pour un scénario donné et en fonction de ce contexte, sélectionne un contenu. Puis, le module ORD teste si d'autres scénarii correspondant à un autre annonceur dans la page publicitaire sont activés (étape 4.6). Si c'est le cas, le module saute de nouveau à l'étape 4.5 pour rechercher un autre contenu à visualiser. Le module boucle sur les étapes 4.5 et 4.6 jusqu'à ce qu'il ne reste plus de scénarii à analyser. Les contenus sélectionnés sont ensuite visualisés lorsque la page publicitaire est programmée (étape 4.7). A la suite de quoi, le module ORD met à jour le contexte de visualisation des contenus (étape 4.8) en incrémentant les compteurs associés aux contenus audiovisuels qui ont été visualisés. Puis le module saute à la visualisation de la page diffusée (étape 4.3), pour terminer (s'il reste du temps) la visualisation de la page publicitaire diffusée. On peut ainsi note que des publicités normales (c'est à dire, conforme à l'art antérieur) peuvent se trouver avec des publicités adaptables dans une plage de publicité. Pour synchroniser les contenus extraits en mémoire et diffusés, on peut avoir recours à un léger différé en mémorisant temporairement les données reçues du réseau de diffusion.

Il est dans l'intérêt de l'annonceur publicitaire de définir une fourchette minimum et maximum du nombre d'occurrences car le nombre de visualisation réelle dépend du temps d'utilisation du récepteur. Si l'utilisateur n'utilise pas son récepteur, le nombre minimum d'occurrences programmées n'est alors pas atteint. Le module ORD reconnaît cette situation par le fait que, pour un jour donné, le nombre d'occurrences effectuées est inférieur au nombre d'occurrences programmées. Une solution simple consiste à continuer la campagne publicitaire en respectant les consignes données par l'annonceur.

Un perfectionnement consiste à forcer la visualisation d'un contenu à un moment non programmé par l'annonceur lorsque le nombre d'occurrences minimum programmé n'est pas atteint. Le tableau 4 illustre une telle situation. Le tableau 4 ci-dessous montre l'état d'un bloc mémorisé contenant des données relatives à la campagne définie par le tableau 2 et à la date du 28/5 à 19h00. :

**TABLEAU 4**

| **(données générales de définition du scénario publicitaire mises en mémoire du récepteur)** | | | | |
|---|---|---|---|---|
| Identificateur | Nombre d'occurrences programmées | Fenêtre de visualisation | Nombre d'occurrences Effectuées | Date et heure des occurrences |
| STAR WAR 1 | De 1 à 10 fois | 24/5, 25/5 | 3 | 24/5 :19h27 |
| | | | | 24/5 :2h45, |
| | | | | 25/5 : 8h15 |
| STAR WAR2 | De 1 à 5 fois | 25/5, 26/5 | 2 | 25/5 : 8h26 |
| | | | | 26/5 : 8h56 |
| STAR WAR3 | De 1 à 4 fois | 27/5 | 0 | |
| STAR WAR4 | De 2 à 6 fois | 28/5, 29/5 | 0 | |
| STAR WAR5 | De 2 à 4 fois | 29/5, 30/5 | 0 | |

Suite à une mise sous tension ou lors de l'annonce d'une diffusion prochaine d'une plage publicitaire, le module ORD analyse les données du tableau, et constate que les contenus STAR WAR1 et STAR WAR2 ont été visualisé un nombre de fois correspondant au scénario de l'annonceur, mais que le contenu STAR WAR3 n'a pas été visualisé le 27/5 comme il était prévu. Nous sommes aujourd'hui le 28/5, il est donc trop tard selon le scénario de l'annonceur. Puisque le nombre minimum d'occurrences de STAR WAR3 n'a pas été atteint, le module ORD décide de sélectionner en priorité STAR WAR3 lors de la prochaine plage de visualisation, c'est à dire le 28/5 (si l'utilisateur regarde des programmes ce jour là). De cette façon, pour respecter en partie lé scénario, le contenu STAR WAR3 sera visualisé au moins une fois. Le contenu STAR WAR4 pourra ensuite être visualisé comme cela a été programmé par le diffuseur. De façon générale, le module ORD visualise en priorité une séquence dont le nombre minimum d'occurrences n'est pas atteint et dont toutes les dates programmées par l'annonceur sont dépassées.

De cette manière, l'ordonnancement des contenus est bien respecté et l'utilisateur voit au moins une fois les contenus dans l'ordre programmé par l'annonceur. Le module ORD peut ainsi rétablir après coup un ordonnancement.

Selon une autre variante de réalisation, le module ORD va prendre en compte des données d'indice pour anticiper une situation où les visualisations programmées risquent de ne pas être faites, et faire en sorte qu'en visualisant les contenus avant la date programmée de visualisation, l'ordonnancement soit respecté. En analysant le contexte, le module ORD peut s'apercevoir qu'un utilisateur n'utilise jamais son récepteur certain jour de la semaine, or l'annonceur a programmé ces jours là des contenus. Prenons un exemple de première partie de contexte qui concerne les habitudes de l'utilisateur, on voit que depuis un certain temps, cet utilisateur n'utilise pas son récepteur le mercredi et le jeudi :

**TABLEAU 5**

| **Jour** | **Temps moyen d'utilisation** | **Plages horaires probables d'utilisation** |
|---|---|---|
| Lundi | 1h34' | [19h32-20h15] |
| Mardi | 2h23' | [18h28-19h45] ; [20h30-21h30] |
| Mercredi | 0h00 | - |
| Jeudi | 0h00 | - |
| Vendredi | 3h15' | [18h50-21h23] |
| Samedi | 4h15' | [12h15-13h26] ; [19h53-21h15] |
| Dimanche | 2h10' | [20h32-22h15] |

Compte tenu des données d'utilisation ci-dessus, le module ORD décide alors que si un bloc définissant un scénario contient un contenu à visualiser un mercredi, ce contenu pourra être reproduit le mardi précédent. Le mardi, le module ORD commence par visualiser les contenus effectivement programmés pour ce jour-là. Puis, par exemple une heure avant la fin de la plage horaire probable d'utilisation (c'est-à-dire 20H30 selon les données du tableau 5), le module ORD visualise les contenus programmés pour le mercredi.

Selon un autre perfectionnement, une valeur de priorité définie par l'annonceur est associée à chaque contenu. De ce fait, l'ordonnancement défini par l'ordre des identificateurs n'est plus un critère principal. La priorité est utilisée par le module ORD lorsque l'utilisateur regarde très peu les émissions et qu'un choix doit être fait entre deux contenus. Selon un mode simplifié de réalisation, les contenus sont visualisés les uns à la suite des autres : d'abord STAR WAR1, puis STAR WAR2, ... et enfin STAR WAR5, selon l'ordre défini par les identificateurs du tableau. Ce mode simple est plus adapté à des utilisateurs ne regardant pas souvent les programmes. Les autres utilisateurs voient les séquences en groupes, par exemple, cinq fois de suite STAR WAR1, puis cinq STAR WAR2, ... etc. Un tel utilisateur peut être fatigué de voir toujours les mêmes séquences.

Pour résoudre cet inconvénient, on associe à la notion de priorité un nombre d'occurrences maximum par jour. Voici un exemple d'un bloc de données définissant un scénario de visualisation de cinq contenus audiovisuels avec des priorités et des nombres maximum d'occurrences par jour:

**TABLEAU 6**

| **(données générales de définition du scénario publicitaire)** | | | |
|---|---|---|---|
| Identificateur du contenu | Occurrences visualisation | Fenêtre de visualisation programmée | Priorité du contenu identifié |
| STAR WAR1 | De 1 à 20 fois 4/J max | 24/5, 25/5, 26/5, 27/5, 28/8, 29/5, 30/5 | 5 |
| STAR WAR2 | De 1 à 6 fois 3/J max | 27/5, 28/5, 29/5, 30/5 | 4 |
| STAR WAR3 | De 1 à 4 fois 2/J max | 29/5, 30/5 | 3 |
| STAR WAR4 | 2 fois 2/J max | 30/5 | 1 |
| STAR WAR5 | De 1 à 3 fois 2/J max | 29/5, 30/5 | 2 |

Selon le tableau 6, STAR WAR4 possède la plus haute priorité et STAR WAR1 la plus faible. Comme les cinq contenus sont programmés pour le 30/5, ils seront visualisés selon l'ordre de priorité et autant de fois que le nombre maximum d'occurrences pour ce jour là. Voici la liste des séquences visualisées sous le contrôle du module ORD :
- STAR WAR4 2 fois,
- STAR WAR5 2 fois,
- STAR WAR3 2 fois,
- STAR WAR2 3 fois,
- STAR WAR1 4 fois

On voit que si le nombre d'occurrences maximum par jour a été atteint, le module ORD passe au contenu de priorité immédiatement inférieure. Lorsque le nombre d'occurrences maximum est atteint, la séquence ne sera plus visualisée. L'annonceur doit faire en sorte que le nombre maximum par jour multiplié par le nombre de jour programmée est au moins égal à celui du maximum d'occurrences de cette séquences au cours de la campagne. Par exemple, si STAR WAR1 est programmée au maximum 20, et peut être visualisé 4 fois au maximum par jour pendant sept jours : 20 est inférieur à 28. Avantageusement, l'annonceur prévoit une marge pour que chaque récepteur puisse s'adapter à ce qe fait réellement l'utilisateur. Ainsi, le module ORD peut anticiper en prenant en compte les habitudes de l'utilisateur : si celui-ci regarde assez peu la télévision en fin de semaine, le module ORD décide de visualiser le maximum de séquences STAR WAR1 en début de semaine, les vingt séquences au cours des cinq premiers jours.

Dans le cadre de la présente invention, il est bien entendu que n'importe quel perfectionnement précédemment ci-après décrit :
- visualisation en alternance
- visualisation en retard
- visualisation par anticipation des habitudes de l'utilisateur,
- priorité des séquences
- définition d'un nombre maximum de visualisation par jour
peut être ajouté indépendamment les uns des autres au scénario de base défini par le tableau. Cela confère au procédé de visualisation une très grande faculté d'adaptation au comportement des utilisateurs.

Nous allons maintenant décrire par un exemple les actions faites par le module ORD pour adapter les visualisations de séquences publicitaires aux habitudes d'un utilisateur.

Voici sous forme d'un tableau, la visualisation optimale souhaitée par l'annonceur (« STAR WARi » est abrégé en « SW i ») :

| 24/5 | 25/5 | 26/5 | 27/5 | 28/5 | 29/5 | 30/5 |
|---|---|---|---|---|---|---|
| SW1 | SW1 | SW1 | SW2 | SW2 | SW5 | SW5 |
| SW1 | SW1 | SW1 | SW1 | SW1 | SW3 | SW4 |
| SW1 | SW1 | SW1 | SW2 | SW2 | SW2 | SW2 |
| | | | S1 | SW1 | SW1 | SW1 |
| | | | SW1 | SW1 | SW3 | SW5 |
| | | | | | SP1 | SW4 |
| | | | | | SW1 | SW1 |
| | | | | | | SW4 |
| | | | | | | SW4 |

Ce scénario de visualisation doit cependant tenir compte de l'utilisateur. Voici par exemple ce qui s'est réellement passé :

| 24/5 | 25/5 | 26/5 | 27/5 | 28/5 | 29/5 | 30/5 |
|---|---|---|---|---|---|---|
| SW1 | SW1 | SW1 | SW2 | SW2 | SW5 | SW5 |
| SW1 | SW1 | SW1 | SW1 | SW2 | SW5 | SW4 |
| SW1 | SW1 | SW1 | SW1 | SW2 | SW3 | SW4 |
| SW1 | SW1 | SW1 | SW1 | SW1 | SW3 | SW3 |
| | | | SW1 | SW1 | | |
| | | | SW1 | SW1 | | |
| | | | | SW1 | | |

On peut voir que le module ORD a anticipé le fait que le 30/5, beaucoup de séquences sont programmées et que les habitudes de l'utilisateur ne permettront pas de les visualiser toutes. De ce fait, le module ORD a programmé la visualisation de plus d'avantage de séquence SW1 les premiers jours. A la fin de la visualisation de ce scénario (au soir du 30/5), les données de contexte associé à l'utilisation de ce scénario sont :

**TABLEAU 7**

| **Données générales de définition du scénario publicitaire** | | | | | |
|---|---|---|---|---|---|
| Identificateur | Nombre occurrences programmées | Fenêtre de visualisation | Priorité | Nombre occurrences Effectuées | Date /heure des occurrences |
| STAR WAR1 | De 1 à 20 fois 4 / J | 24/5, 25/5, 26/5, 27/5, 28/8, 29/5, 30/5 | 5 | 20 | 24/5 , 24/5, |
| | | | | | 24/5, 24/5, |
| | | | | | 25/5, 25/5 |
| | | | | | 25/5, 25/5 |
| | | | | | 26/5, 26/5 |
| | | | | | 26/5, 26/5 |
| | | | | | 27/5, 27/5 |
| | | | | | 27/5, 27/5 |
| | | | | | 28/5, 28/5 |
| | | | | | 28/5, 28/5 |
| STAR WAR2 | De 1 à 6 fois 3 / J | 28/5, 29/5, 30/5 | 4 | 4 | 28/5 : 18h26 |
| | | | | | 28/5 : 22h56 |
| | | | | | 28/5 : 17h05 |
| | | | | | 30/5 : 23h15 |
| STAR WAR3 | De 1 à 4 fois 2/J | 29/5, 30/5 | 3 | 3 | 29/5 : 21h16 |
| | | | | | 29/5 : 22h45 |
| | | | | | 30/55 : 22h30 |
| STAR WAR4 | 2 fois 2/J | 30/5 | 1 | 1 | 30/5 : 19h15 |
| | | | | | 30/5 : 20h30 |
| STAR WAR5 | De 1 à 3 fois 2/J | 29/5, 30/5 | 2 | 3 | 29/5 : 15h45 |
| | | | | | 29/5 18h30 |
| | | | | | 30/5 : 21h40 |

On voit en exploitant les données mémorisées que :
- Le contenu STAR WAR1 ayant la plus faible priorité, a été visualisé 20 fois en cinq jours, à raison de quatre fois par jour. Ayant atteint son nombre maximum, le module ORD ne l'a plus sélectionné les deux derniers jours (29/5 et 30/5) où il pouvait être visualisé.
- Le contenu STAR WAR2 (priorité 4) a été visualisé 3 fois le 28/5, ce qui est le maximum par jour, et une seule fois le 30/5. Sa faible priorité par rapport aux autres séquences n'a pas permis d'atteindre l'objectif maximal de 6 occurrences.

- Le contenu STAR WAR3 (priorité 3) a été visualisé 2 fois le 29/5 et qu'une seule fois le 30/5.
- Le contenu STAR WAR4 (priorité maximale 1) a été visualisé deux fois le jour prévu. Dans la mesure où cette séquence est prioritaire, l'atteinte de son objectif est quasiment certaine.
- Le contenu STAR WAR5 (priorité 2) a été visualisé 2 fois le premier jour (29/5), puis une dernière fois le second jour. L'objectif de trois visualisations est donc rempli.

Les contenus STAR WAR 2 et STAR WAR 3 ont été visualisés un nombre d'occurrences inférieur à celui maximum. Cela s'explique par le fait que beaucoup de séquences sont programmées les derniers jours de la campagne et que ces séquences ont une priorité plus grande que celles de STAR WAR 2 et STAR WAR 3. Comme c'est le dernier jour, il n'est pas possible de visualiser le lendemain, les séquences qui auraient dû l'être précédemment. Cette situation aurait pu être évitée en utilisant la visualisation par anticipation et en tenant compte des habitudes de l'utilisateur. Le module ORD aurait alors visualisé plus tôt STAR WAR2 et STAR WAR3, par exemple une fois STAR WAR2 le 27/5 et une fois STAR WAR3 le 28/5. Le module qui gère les habitudes de l'utilisateur va tenir compte de ce récent comportement de l'utilisateur, et de ce fait ce problème peut ne plus apparaître par la suite.

On voit par cet exemple la souplesse, que procure les blocs de scénario élaborés par l'annonceur ainsi que la précision que peut apporter le module ORD pour que les consignes données par l'annonceur soient suivies le mieux possible.

Selon un perfectionnement, lorsque la campagne publicitaire est terminée, c'est à dire lorsque la dernière fenêtre temporelle indiquée dans le scénario est terminée, le récepteur transmet par le réseau numérique 6 ou plus simplement une voie de retour, les données effectives de la campagne. Pour cela, il transmet les données des colonnes « occurrences effectuées » et « date et heures des occurrences effectuées » associées à l'identificateur du contenu. De cette manière, le diffuseur connaît le nombre de séquences effectivement visualisées devant un utilisateur et en transmettant ces informations à l'annonceur publicitaire, il peut lui facturer le nombre de séquences visualisées. Avantageusement, la première partie du contexte (associée aux habitudes de l'utilisateur) est également transmise, de cette manière l'annonceur peut connaître la durée et les moments d'utilisation des récepteurs, donc les habitudes des utilisateurs et en tenir compte lors de l'élaboration de nouveaux scénarii.

Les exemples de réalisation de l'invention présentés ci-dessus ont été choisis leur caractère concret. Il ne serait cependant pas possible de répertorier de manière exhaustive tous les modes de réalisation que recouvre cette invention. En particulier, toute étape ou tout moyen décrit peut-être remplacé par une étape ou un moyen équivalent sans sortir du cadre de la présente invention.

## Revendications

1. Procédé de visualisation de séquences audiovisuelles par un appareil doté d'un moyen de réception et d'enregistrement des dites séquences, ledit procédé comportant les étapes suivantes :
- réception d'un scénario de visualisation comportant des groupes de données associant au moins un identificateur de séquences avec au moins une fenêtre temporelle de visualisation ,
et consécutivement à la réception d'une information de déclenchement provenant d'un réseau de diffusion (4.1, 4.2):
- sélection (4.5) d'au moins une séquence avant au moins une fenêtre temporelle de visualisation associée à cette séquence,
- visualisation (4.8) de la ou des séquences sélectionnées,
**caractérisé en ce que** :
- ledit procédé comprend en outre une étape de constitution de données d'utilisation de l'appareil ; et
- la visualisation de la ou des séquences sélectionnées est effectuée avant au moins la fenêtre temporelle associée à la ou aux séquences sélectionnées et définie dans le scénario, si des données d'utilisation montrent que l'appareil n'est habituellement pas utilisé au cours de ladite fenêtre temporelle.

2. Procédé de visualisation de séquences audiovisuelles selon la revendication 1, **caractérisé en ce qu'**il comporte une étape de sélection (4.5) d'une séquence au moins dont la fenêtre temporelle de visualisation associée correspond au moment présent, la sélection de séquence s'effectuant tant que lé nombre de visualisations de ladite séquence n'a pas atteint une valeur maximale, ladite valeur étant transmise dans le scénario de visualisation.

3. Procédé de visualisation de séquences audiovisuelles selon la revendication 2, **caractérisé en ce que** la fenêtre temporelle de visualisation est découpée en une pluralité de périodes telles que des journées, la séquence associée n'étant plus visualisée au cours d'une période déterminée lorsqu'un nombre maximum de visualisations pour cette période est atteint.

4. Procédé de visualisation de séquences audiovisuelles selon la revendication 2 ou 3, **caractérisé en ce qu'**une pluralité de séquences sont associées à un nombre maximum de visualisations et au moins une fenêtre temporelle de visualisation, les séquences de la pluralité étant alternativement sélectionnées lorsque la fenêtre temporelle associée comprend le moment présent et si le nombre maximum de visualisations n'a pas été atteint.

5. Procédé de visualisation de séquences audiovisuelles selon la revendication 4, **caractérisé en ce que** l'ordre pour visualiser les séquences associées est défini aléatoirement.

6. Procédé de visualisation de séquences audiovisuelles selon l'une quelconque des revendications précédentes, **caractérisé en ce qu'**une valeur de priorité est associée aux séquences, la séquence ayant la plus forte priorité étant sélectionnée et visualisée en premier.

7. Procédé de visualisation de séquences audiovisuelles selon l'une quelconque des revendications précédentes, **caractérisé en ce qu'**une séquence est sélectionnée et visualisée après la fenêtre temporelle indiquée dans le scénario si le nombre de visualisations de cette séquence n'a pas atteint une valeur minimale.

8. Récepteur (1) d'émissions audiovisuelles comprenant :
- un moyen de réception (4, 5) de séquences audiovisuelles et d'un scénario de visualisation comportant des groupes de données associant au moins un identificateur de séquences, avec au moins une fenêtre temporelle de visualisation,
- un moyen d'émission de signaux de visualisation (10),
- un moyen de sélection (3, 12, 13) d'au moins une séquence avant au moins une fenêtre temporelle de visualisations associée à cette séquence,
**caractérisé en ce que**:
- ledit récepteur comporte en outre un moyen de constitution de données d'utilisation du récepteur,
- ledit moyen de sélection est configuré pour être activé consécutivement à la réception d'une information de déclenchement de la visualisation de séquence provenant d'un réseau de diffusion,
- ledit moyen d'émission de signaux est configuré pour émettre les signaux des séquences sélectionnées pour la visualisation avant au moins la fenêtre temporelle associée à la ou aux séquences sélectionnées et définie dans le scénario, si des données d'utilisation montrent que le récepteur n'est habituellement pas utilisé au cours de ladite fenêtre temporelle.

9. Récepteur (1) d'émissions audiovisuelles selon la revendication 8, **caractérisé en ce que** le moyen de sélection (3,12,13) sélectionné en outre une séquence au moins dont la fenêtre temporelle de visualisation associée correspond au moment présent.

10. Récepteur (1) d'émissions audiovisuelles selon la revendication 8 ou 9, **caractérisé en ce que** le scénario reçu comporte un nombre maximum de visualisations associé à au moins une séquence, le récepteur comportant un moyen de comptabilisation des visualisations d'une séquence au moins, la sélection de séquence s'effectuant tant que le nombre de visualisations de ladite séquence n'a pas atteint une valeur maximale.

11. Récepteur (1) d'émissions audiovisuelles selon l'une quelconque des revendications 8 à 10, **caractérisé en ce que** le scénario reçu comporte un nombre maximum de visualisations associé à une pluralité de séquences, le moyen de sélection (3,12,13) sélectionnant alternativement chaque séquences lorsque la fenêtre temporelle associée comprend le moment présent et si le nombre maximum de visualisations n'a pas été atteint.

12. Récepteur (1) d'émissions audiovisuelles selon l'une quelconque des revendications 8 à 11, **caractérisé en ce que** le scénario reçu comporte une valeur de priorité associé à au moins une séquence, le moyen de sélection (3,12,13) sélectionnant en priorité les séquences dont la valeur est la plus grande.

13. Récepteur (1) d'émissions audiovisuelles selon l'une quelconque des revendications 10 à 12, **caractérisé en ce que** le moyen de sélection (3, 12, 13) sélectionne une séquence après la fenêtre temporelle indiquée dans le scénario si le nombre de visualisations de cette séquence n'a pas atteint une valeur minimale.

## Patentansprüche

1. Verfahren zum Anzeigen von audiovisuellen Sequenzen mittels eines Gerätes, ausgestattet mit einem Mittel zum Empfang und zur Aufnahme besagter Sequenzen, wobei das besagte Verfahren die folgenden Schritte umfasst:
- Empfang eines Anzeigeszenarios, bestehend aus Datengruppen, die mindestens eine Sequenzkennzahl mit mindestens einem Anzeigezeitfenster verbinden,
und im Anschluss an den Empfang einer aus einem Verteilernetz (4.1, 4.2) stammenden Auslöseinformation:
- Auswahl (4.5) von mindestens einer Sequenz vor mindestens einem Anzeigezeitfenster, das mit dieser Sequenz verbunden ist,
- Anzeige (4.8) von der oder den ausgewählten Sequenz/en, **dadurch gekennzeichnet, dass**:
- das besagte Verfahren unter anderem einen Schritt zur Erstellung von Nutzungsdaten des Gerätes umfasst, und
- die Anzeige von der oder den ausgewählten Sequenz/en mindestens vor dem Zeitfenster ausgeführt wird, das mit der oder den ausgewählten Sequenz/en verbunden und im Szenario festgelegt ist, sofern Nutzungsdaten anzeigen, dass das Gerät in der Regel nicht im Laufe des besagten Zeitfensters genutzt wird.

2. Verfahren zum Anzeigen von audiovisuellen Sequenzen nach Anspruch 1, **dadurch gekennzeichnet, dass** es einen Schritt zur Auswahl (4.5) von mindestens einer Sequenz umfasst, deren verbundenes Anzeigezeitfenster dem gegenwärtigen Zeitpunkt entspricht, wobei die Sequenzauswahl vorgenommen wird, solange die Anzahl von Anzeigen der besagten Sequenz keinen Höchstwert erreicht hat, wobei der besagte Wert in das Anzeigeszenario übertragen wird.

3. Verfahren zum Anzeigen von audiovisuellen Sequenzen nach Anspruch 2, **dadurch gekennzeichnet, dass** das Anzeigezeitfenster in eine Vielzahl von Zeiträumen wie zum Beispiel Tagen zerlegt wird, wobei die verbundene Sequenz im Laufe eines bestimmten Zeitraums nicht mehr angezeigt wird, wenn für diesen Zeitraum ein Höchstanzahl von Anzeigen erreicht wird.

4. Verfahren zum Anzeigen von audiovisuellen Sequenzen nach Anspruch 2 oder 3, **dadurch gekennzeichnet, dass** eine Vielzahl von Sequenzen mit einer Höchstanzahl von Anzeigen und mit mindestens einem Anzeigezeitfenster verbunden werden, wobei die Sequenzen der Vielzahl alternativ ausgewählt werden, wenn das verbundene Zeitfenster den gegenwärtigen Zeitpunkt umfasst und sofern die Höchstanzahl von Anzeigen nicht erreicht worden ist.

5. Verfahren zum Anzeigen von audiovisuellen Sequenzen nach Anspruch 4, **dadurch gekennzeichnet, dass** die Reihenfolge zum Anzeigen der verbundenen Sequenzen zufällig festgelegt wird.

6. Verfahren zum Anzeigen von audiovisuellen Sequenzen nach einem der vorstehenden Ansprüche, **dadurch gekennzeichnet, dass** ein Prioritätswert mit den Sequenzen verbunden wird, wobei die Sequenz mit der höchsten Priorität zuerst ausgewählt und angezeigt wird.

7. Verfahren zum Anzeigen von audiovisuellen Sequenzen nach einem der vorstehenden Ansprüche, **dadurch gekennzeichnet, dass** eine Sequenz nach dem im Szenario angegebenen Zeitfenster ausgewählt und angezeigt wird, sofern die Anzahl von Anzeigen dieser Sequenz keinen Mindestwert erreicht hat.

8. Empfänger (1) von audiovisuellen Sendungen, der umfasst:
- ein Mittel zum Empfang (4, 5) von audiovisuellen Sequenzen und von einem Anzeigeszenario, bestehend aus Datengruppen, die mindestens eine Sequenzkennzahl mit mindestens einem Anzeigezeitfenster verbinden,
- ein Mittel zur Sendung von Anzeigesignalen (10),
- ein Mittel zur Auswahl (3, 12, 13) von mindestens einer Sequenz vor mindestens einem Anzeigezeitfenster, das mit dieser Sequenz verbunden ist,
**dadurch gekennzeichnet, dass**:
- der besagte Empfänger unter anderem ein Mittel zur Erstellung von Nutzungsdaten des Empfängers umfasst,
- das besagte Auswahlmittel so konfiguriert ist, um im Anschluss an den Empfang einer von einem Verteilernetz ausgehenden Auslöseinformation der Sequenzanzeige aktiviert zu werden,
- das besagte Mittel zur Sendung von Signalen so konfiguriert ist, um die Signale der für die Anzeige ausgewählten Sequenzen mindestens vor dem Zeitfenster auszusenden, das mit der oder den ausgewählten Sequenz/en verbunden und im Szenario festgelegt ist, sofern Nutzungsdaten anzeigen, dass das Gerät in der Regel nicht im Laufe des besagten Zeitfensters genutzt wird.

9. Empfänger (1) von audiovisuellen Sendungen nach Anspruch 8, **dadurch gekennzeichnet, dass** durch das Mittel zur Auswahl (3, 12, 13) unter anderem mindestens eine Sequenz ausgewählt wird, deren verbundenes Anzeigezeitfenster dem gegenwärtigen Zeitpunkt entspricht.

10. Empfänger (1) von audiovisuellen Sendungen nach Anspruch 8 oder 9, **dadurch gekennzeichnet, dass** das erhaltene Szenario eine Höchstanzahl von Anzeigen umfasst, die mit mindestens einer Sequenz verbunden ist, wobei der Empfänger eine Abrechnungseinrichtung der Anzeigen von mindestens einer Sequenz umfasst, wobei die Sequenzauswahl vorgenommen wird, solange die Anzahl von Anzeigen der besagten Sequenz keinen Höchstwert erreicht hat.

11. Empfänger (1) von audiovisuellen Sendungen nach einem der Ansprüche 8 bis 10, **dadurch gekennzeichnet, dass** das erhaltene Szenario eine Höchstanzahl von Anzeigen umfasst, die mit einer Vielzahl von Sequenzen verbunden ist, wobei durch das Mittel zur Auswahl (3, 12, 13) alternativ jede Sequenz ausgewählt wird, wenn das verbundene Zeitfenster den gegenwärtigen Zeitpunkt umfasst und sofern die Höchstanzahl von Anzeigen nicht erreicht worden ist.

12. Empfänger (1) von audiovisuellen Sendungen nach einem der Ansprüche 8 bis 11, **dadurch gekennzeichnet, dass** das erhaltene Szenario einen Prioritätswert umfasst, der mit mindestens einer Sequenz verbunden ist, wobei durch das Mittel zur Auswahl (3, 12, 13) als Erstes die Sequenzen ausgewählt werden, bei denen der Wert am größten ist.

13. Empfänger (1) von audiovisuellen Sendungen nach einem der Ansprüche 10 bis 12, **dadurch gekennzeichnet, dass** durch das Mittel zur Auswahl (3, 12, 13) eine Sequenz nach dem im Szenario angegebenen Zeitfenster ausgewählt wird, sofern die Anzahl von Anzeigen dieser Sequenz keinen Mindestwert erreicht hat.

## Claims

1. Method for displaying audiovisual sequences using a device equipped with a means of receiving and recording said sequences, said method comprising the following steps:
- reception of a display scenario comprising groups of data associating at least one sequence identifier with at least one time display window,
and following the reception of an item of trigger information originating from a broadcast network (4.1,4.2):
- selection (4.5) of at least one sequence before at least one time display window associated with this sequence,
- display (4.8) of the selected sequence or sequences,
**characterised in that**:
- said method further comprises a step of compiling device usage data; and
- the display of the selected sequence or sequences is performed before at least the time window associated with the selected sequence or sequences and defined in the scenario, if usage data shows that the device is not normally used during said time window.

2. Method for displaying audiovisual sequences according to claim 1, **characterised in that** it comprises a step of selection (4.5) of at least one sequence whose associated time display window corresponds to the present moment, the sequence selection being performed as long as the number of displays of said sequence has not reached a maximum value, said value being transmitted in the display scenario.

3. Method for displaying audiovisual sequences according to claim 2, **characterised in that** the time display window is divided into a plurality of periods, such as days, the associated sequence no longer being displayed during a predetermined period when a maximum number of displays for this period is reached.

4. Method for displaying audiovisual sequences according to claim 2 or 3, **characterised in that** a plurality of sequences are associated with a maximum number of displays and at least one time display window, the sequences of the plurality being alternately selected when the associated time window comprises the present moment and if the maximum number of displays has not been reached.

5. Method for displaying audiovisual sequences according to claim 4, **characterised in that** the order for displaying the associated sequences is defined randomly.

6. Method for displaying audiovisual sequences according to any one of the preceding claims, **characterised in that** a priority value is associated with the sequences, the sequence having the highest priority being selected and displayed first.

7. Method for displaying audiovisual sequences according to any one of the preceding claims, **characterised in that** a sequence is selected and displayed after the time window indicated in the scenario if the number of displays of this sequence has not reached a minimum value.

8. Receiver (1) of audiovisual transmissions comprising:
- a means of reception (4, 5) of audiovisual sequences and of a display scenario comprising groups of data associating at least one sequence identifier, with at least one time display window,
- a means of transmission of display signals (10),
- a means of selection (3, 12, 13) of at least one sequence before at least one time display window associated with this sequence,
**characterised in that**:
- said receiver further comprises a means of compiling receiver usage data,
- said selection means is configured to be activated following the reception of an item of sequence display trigger information originating from a broadcast network,
- said means of transmission of signals is configured to transmit the signals of the selected sequences for display before at least the time window associated with the selected sequence or sequences and defined in the scenario, if usage data shows that the receiver is not normally used during said time window.

9. Receiver (1) of audiovisual transmissions according to claim 8, **characterised in that** the selection means (3,12,13) further selects at least one sequence whose associated time display window corresponds to the present moment.

10. Receiver (1) of audiovisual transmissions according to claim 8 or 9, **characterised in that** the received scenario comprises a maximum number of displays associated with at least one sequence, the receiver comprising a means of counting the displays of at least one sequence, the sequence selection being performed as long as the number of displays of said sequence has not reached a maximum value.

11. Receiver (1) of audiovisual transmissions according to any one of claims 8 to 10, **characterised in that** the received scenario comprises a maximum number of displays associated with a plurality of sequences, the selection means (3,12,13) alternately selecting each sequence when the associated time window comprises the present moment and if the maximum number of displays has not been reached.

12. Receiver (1) of audiovisual transmissions according to any one of claims 8 to 11, **characterised in that** the received scenario comprises a priority value associated with at least one sequence, the selection means (3,12,13) giving priority to the selection of the sequences whose value is the greatest.

13. Receiver (1) of audiovisual transmissions according to any one of claims 10 to 12, **characterised in that** the selection means (3,12,13) selects a sequence after the time window indicated in the scenario if the number of displays of this sequence has not reached a minimum value.
